# EUROPEAN PATENT SPECIFICATION

(11) **EP 2 214 370 B1**
(45) Date of publication and mention of the grant of the patent: **14.12.2011**
(21) Application number: 09756940.4
(22) Date of filing: 28.10.2009
(51) Int. Cl.: H04L 29/06

(54) **METHOD, DEVICE AND SYSTEM FOR CONFIRMING VERSION INFORMATION**
VERFAHREN, VORRICHTUNG UND SYSTEM ZUR BESTÄTIGUNG VON VERSIONSINFORMATIONEN
PROCÉDÉ, DISPOSITIF ET SYSTÈME DE CONFIRMATION D'INFORMATIONS DE VERSION

(30) Priority: 27.11.2008 CN 200810217793
(43) Date of publication of application: 04.08.2010
(73) Proprietor: Huawei Technologies Co., Ltd., Shenzhen, Guangdong 518129 (CN)
(72) Inventor: XIAO, Baisha, Shenzhen Guangdong 518129 (CN)
(74) Representative: Thun, Clemens
(86) International application number: PCT/CN2009/074651
(87) International publication number: WO 2010/060328

(56) References cited:
- WO-A2-99/53713
- CN-A- 1 383 664
- CN-A- 1 595 860
- CN-A- 1 913 524
- US-A1- 2004 002 338
- US-A1- 2005 172 012
- US-A1- 2006 282 545

## Description

### FIELD OF TECHNOLOGY

The present disclosure relates to the field of communications, and more particularly to a method, apparatus and system for determining version information.

### BACKGROUND OF THE DISCLOSURE

With the development of the Third Generation Partnership Project (3GPP) protocols, the Mobile Application Part (MAP) protocol of a core network has been developed to have several versions, such as Phase 1, Phase 2 and Phase 2+. With the update of the versions, the MAP protocol can realize more and more functions and support more and more services, resulting in diversity and complication of versions supported by devices in a current network. Accordingly, interactions among devices with different protocol versions in the current network become complicated due to complication of the constitution of the devices. Therefore, there may be a situation that versions of the adopted MAP layer protocol during interaction of the network devices are inconsistent with each other. For such a situation, the MAP layer protocol prescribes that it is necessary to make a session. The interaction is achieved by downgrading the version and by downward compatibility, which thus leads to the existence of a lot of version negotiations if the versions of the MAP layer protocol of the network devices are inconsistent with each other.

At present, to effectively reduce session operations among the network devices, a conventional method is to generally adopt the way of unifying the MAP versions of the network devices so as to make the MAP versions of all the network devices consistent and avoid sessions among the network devices. With improvement of the MAP version itself and development of each novel service, it becomes impossible to make the MAP versions of all the network devices consistent or to avoid the sessions among the network devices.

Another conventional method is to record the address of an opposite device and the adopted MAP version information in case of successfully receiving and sending a message, and then adopt the MAP version information previously recorded to send a message to the device subsequently so as to effectively reduce sessions. The realization of the method is based on the successful message interaction (such as sending or receiving) so as to obtain the version information at the opposite device. In this way, it is possible to use the version number previously recorded in a subsequent message interaction. However, many devices at the opposite ends may not support the version negotiation flow in the current network, resulting in failure in interactions among the devices. Thus, it is impossible to record the version information of the devices at the opposite ends or to reduce sessions, which causes waste of the network resources.

For example, WO99/53713A2 disclosed a system and method in a communication network for minimizing the number of attempts required to establish a communication between two nodes. Each node maintains a database table composed of addresses of other nodes within the communications system. Associated with each nodal entry is a list of dialogue types that have been initiated with or terminated from the relevant node. Associated with each dialogue type entry is the most-advanced protocol version, such as the Mobile Application Part (MAP), that has been negotiated with the affiliated node for that dialogue type. When a first node wishes to initiate a dialogue with a second node, the first node checks the database table. The first node locates the second node in the table by the address, locates the appropriate dialogue by type, and then determines the appropriate MAP version. If either the node or the specifically desired dialogue type is not within the database table, the first node attempts to establish the dialogue with the highest MAP version that the first node supports. After any resulting fall-back procedure has occurred, the first node stores in the database table the highest MAP version that was negotiated. The database table is periodically refreshed by clearing one or more entries.

### SUMMARY OF THE DISCLOSURE

In view of the above, the disclosure is made to solve the problems with the current network that interactions among devices fail because some devices do not support version negotiation, and a session fails because the version information of an opposite device cannot be determined.

An embodiment of the present disclosure provides a method for determining version information, including:
sending a first session request to a device according to a random version other than the lowest version of a Mobile Application Part (MAP) protocol, and receiving error code information returned by the device in response to the first session request, the error code information including a message returned when the device does not support version negotiation procedure or a message returned when the device fails to identify the session request;
judging that the device does not support the version negotiation procedure according to the error code information and sending at least one session request to the device; and
determining version information of the MAP protocol adopted by the device according to at least one piece of information returned by the device in response to said at least one session request,
wherein the process of sending said at least one session request to the device includes:
   changing version information for a session request to be sent each time; and
   sending the session request according to the changed version information,
   and wherein the process of determining the version information of the MAP protocol adopted by the device according to the at least one piece of information returned by the device in response to said at least one session request includes:
      receiving information returned by the device in response to the session request sent each time; and
      when the information returned by the device is the error code information, determining the version information for the previous session request to be the version information of the MAP protocol adopted by the device, while determining the version information of the MAP protocol adopted by the device to be the highest version, if non-error code information is returned in the case of changing the version information for the session request to be sent each time, up to the highest version.

Another embodiment of the present disclosure provides an apparatus for determining version information, including:
a requesting module, configured to send a session request to a device;
a receiving module, configured to receive information returned by the device in response to the session request;
a judging module, configured to: judge whether the information returned by the device in response to the session request is error code information; trigger the requesting module to send a session request again when the information returned by the device in response to the first session request is the error code information; and trigger the requesting module again when information returned in response to a next session request is non-error code information; and trigger a determining module when the information returned in response to the next session request is the error code information; and
the determining module, configured to determine version information of a Mobile Application Part (MAP) protocol adopted by the device,
wherein the requesting module includes:
   a changing submodule, configured to change version information of a session request to be sent; and
   a sending submodule, configured to send a session request according to the changed version information,
   and wherein the changing submodule is configured to change the version information for the session request immediately after the first session request to the lowest version, and upgrade the version information for each following session request; and
   the requesting module further includes: a judging submodule, configured to judge whether the version information has been changed to the highest version; and trigger the determining module if it is judged that the version information has been changed to the highest version, or trigger the changing submodule if it is judged that the version information has not been changed to the highest version.

Still another embodiment of the present disclosure provides a system for determining version information, comprising an apparatus for determining version information as mentioned above and a device, wherein the device is configured to receive a session request sent by the apparatus for determining version information and return information in response to said session request.

With the solutions of the embodiments of the present disclosure, the version information of an opposite device not supporting version negotiation, can be determined finally in a way of performing one or more attempts. The solutions solve the problems that many devices cannot interact with each other successfully and thus the version information of the devices cannot be determined, because the devices do not support the version negotiation procedure. Moreover, the version information of a device not supporting the version negotiation can be determined by performing one or more interactions.

### BRIEF DESCRIPTION OF THE DRAWINGS

Fig.1 is a flowchart of a method for determining version information according to an embodiment of the present disclosure.
Fig.2 is a flowchart of a method for determining version information according to another embodiment of the present disclosure.
Fig.3 is a flowchart of a method for determining version information according to still another embodiment of the present disclosure:
Fig.4 is a schematic diagram illustrating the configuration of a system for determining version information according to an embodiment of the present disclosure.
Fig.5 is a schematic diagram illustrating the configuration of an apparatus for determining version information according to an embodiment of the present disclosure.
Fig.6 is a schematic diagram illustrating the configuration of an apparatus for determining version information according to another embodiment of the present disclosure.

### DETAILED DESCRIPTION OF THE EMBODIMENTS

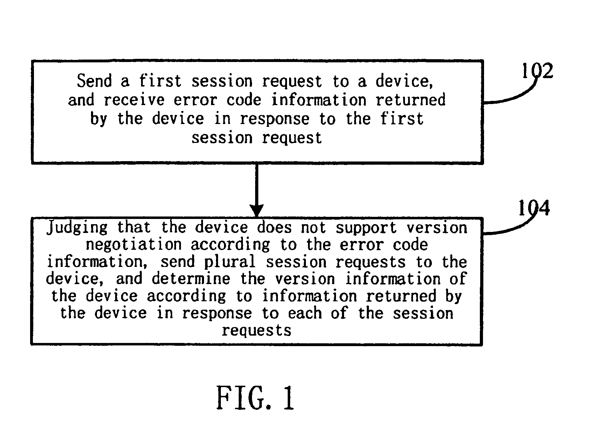

An embodiment of the present disclosure provides a method for determining version information, which is described below with reference to Fig. 1.

In step 102: A first session request is sent to a device, and error code information returned by the device in response to the first session request is received.

Herein, an explanation is made by taking a second device sending the session request to a first device as an example. Since it is the first time for the second device to send the session request to the first device, the second device does not know the version information of the first device and sends the session request to the first device in a random version or a default version. The first device returns error code information to the second device when it does not support the version of the sent session request.

The error code information indicates that the first device does not support the version of the received session request. In consideration of diversity of causes of network errors, it may be possible to previously set the cause of the error of not supporting version negotiation as the error code information. For example, the cause of the error of not supporting the version of the sent session request is X, and X is set to the error code information. When the second device receives a cause of error returned by the first device, it can judge whether the cause of the error is the error code information according to the previously set data. It is judged that the first device does not support the version negotiation if the cause of the error is the error code information. This is applicable to other embodiments of the present disclosure.

In step 104: One or more session requests are sent to the device in response to the error code information, and the version information of the device is determined according to one or more pieces of information returned by the device in response to said one or more session requests.

The second device determines that the first device does not support the version of the first session request when receiving the error code information returned by the first device. In this case, the second device may change version information of a session request to be sent, send a session request to the first device in the changed version, and determine the version information of the first device according to the information returned by the first device in response to the session request of the changed version. Generally, the process of changing the version and sending the session request may be performed once or more times. The first device returns information in response to each session request of the changed version.

In the embodiments of the present disclosure, when the version is changed for the first time, the version information may be changed to the lowest version. If the first device returns non-error information in response to the session request of the changed version, it is judged that the first device supports the changed version. At this time, the version information is further upgraded, and a session request is sent. The process is repeated until the information returned by the first device is the error code information. At this time, the version information is not changed again, and the version information of the previous session request is determined to be the version information of the first device. If the non-error code information is returned even when the version information is changed to the highest version, the process of changing the version information is stopped, and the version information of the first device is determined as the highest version.

Alternatively, it is possible to send one or more session requests to the device so as to determine the version information of the device by changing the version from the highest version to the lowest version or from the middle version, or by changing the version in any other way.

According to the embodiment of the present disclosure, the error code information is previously configured so that, when the error code information is returned, it is assumed that the first device does not support the version of the received session request, and the version information of the first device can be determined by changing the version information of the session request to be sent each time and making one or more attempts according to the information returned by the first device in response to each session request, thereby reducing the process of version negotiation for subsequent interaction, and improving the utilization efficiency of the network resources on the whole.

In some applications such as MAP, the cause of error returned by the first device failing to identify a session request is also X, so the cause of error returned by the first device failing to identify a session request is also considered as the error code information according to the previous configuration. However, since the possibility that the device cannot identify a session request is low, it may still be assumed in the embodiment of the present disclosure that the error code information returned in response to a session request sent in a random version is a message returned by the device which does not support the version negotiation, and the version information of the first device can be determined in the way of changing the version information.

According to the embodiment of the present disclosure, it is possible to exclude the case that the error code information indicates the cause of error returned due to failure of identifying a session request in a way of making one or more attempts. Specifically, when the error code information returned by the first device is received, a session request of the current version is sent to the first device repeatedly. If the error code information is returned until the number of repetition reaches a preset number of times, it is determined that the error code information is the message returned due to inability to support version negotiation, instead of the message returned due to failure of identifying the session request.

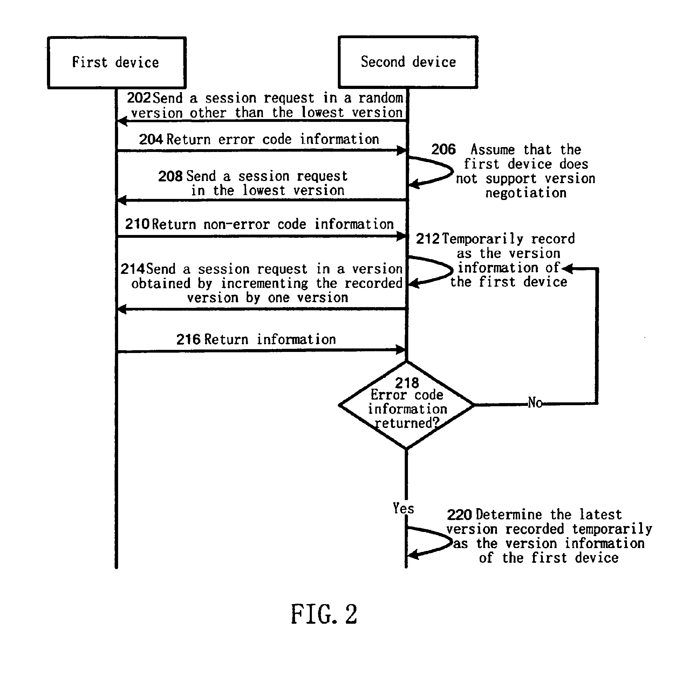

Fig.2 is a specific flow of a method for determining version information according to an embodiment of the present disclosure, in which the process of changing the version information of a session request to be sent for once or more times is described in detail. The method is described below with reference to Fig. 2.

In step 202, a second device sends a session request to a first device.

Since it is the first time for the second device to send the session request to the first device, the second device does not know the version information of the first device and thus sends the session request to the first device in a random version. The random version may be set so as not to be the lowest version or less than the version of the device. If the random version is set to be the lowest version or less than the version of the first device, the first device may support the version negotiation, since the device has capability of downward compatibility to version.

In step 204, the first device returns the error code information to the second device.

In step 206, the second device determines that the first device does not support the version negotiation according to the error code information returned by the first device.

The error code information can be previously configured so as to indicate that the first device does not support the version of the received session request. The second device judges that the information returned by the first device is the error code information according to previously configured data, so as to determine that the first device does not support the version negotiation.

As mentioned above, in MAP, the error code information may be a message returned by a device to which a session request is sent and which does not supporting the version negotiation, or a message by a device to which a session request is sent due to failure of identifying the session request.

According to the embodiment of the present disclosure, it is possible to assume that the error code information is a message returned by the device which does not support the version negotiation without differentiation between the above two cases. The assumption that the device does not support version negotiation is made in consideration of probability and for reducing network interaction process. The wrong assumption can be corrected by the subsequent determining process. Therefore, the error code information returned in response to the session request sent at the first time is assumed to result from the situation where the device does not support the version negotiation.

Alternatively, it may be further possible for the second device to determine that the first device does not support the version negotiation by repeatedly sending a session request to the first device in the same version. The way in which the first device is determined not to support the version negotiation of the first session by repeatedly sending session requests is applicable to other embodiments of the present disclosure.

In step 208, the second device sends a session request to the first device in the lowest version.

Upon receiving the error code information returned by the first device, the second device changes the version information of a session request to be sent to the lowest version, and then sends the session request in the changed version.

In step 210, the first device returns non-error code information to the second device.

Since the devices are downward compatible to versions, the first device generally supports a session request of the lowest version. Therefore, upon receiving the session request sent of the lowest version, the first device returns the non-error code information to the second device. The non-error code information may be a message indicative of successful response, or a message indicating that the cause of error returned is not the cause corresponding to the error code information. For example, a device may not return a message indicative of successful response, but an error message, of which the cause of error is not the cause of error "X" corresponding to the error code information, which indicates that version negotiation is not supported.

In step 212, the second device temporarily records the version information of the first device in response to the returned non-error code information.

Upon receiving the information returned by the first device, the second device temporarily records the version information of the session request sent at the current time as the version information of the first device if the second device determines that the received information is non-error information. For example, when the non-error code information returned in step 210 is received, the version information of the first device is temporarily recorded as the lowest version. In the recording process, if there has been the version information of the first device temporarily recorded, a replacement is performed to the recorded version information; otherwise, the recording is performed.

In step 214, the second device sends a session request to the first device in a version obtained by upgrading the temporarily recorded version by one version.

Upon receiving the non-error code information returned by the first device, the second device upgrades the version and then sends a session request in the changed version.

In step 216, the second device receives the information returned by the first device.

In step 218, the procedure returns to step 212 if the returned information is the non-error code information, and proceeds to step 220 if the returned information is the error code information.

If the returned information is the non-error code information, the first device supports the version negotiation in the session request at the current time. The second device continues to change the version of a session request to be sent and send a session request to the first device in the changed version, and temporarily records the version information of the first device, which replaces the previously temporarily recorded version information, every time the non-error code information is returned. At every time, the second device sends a session request the first device in a version obtained by upgrading the replaced version by one version, and replaces the temporarily recorded version information of the first device each time when the non-error code information is returned.

By changing the version information of a session request to be sent each time, sending a session request to the first device in the changed version information, and receiving the information returned by the first device in response to the session request until the information returned by the first device is the error code information, the second device determines the version information of the previous session request to be the version information of the first device. That is, the final version information of the first device is determined by continuously performing the process of upgrading the version information of a session request to be sent.

Alternatively, before returning to step 212, it may be further judged whether the version of the current session request reaches the highest version. If not, the procedure returns to step 212; otherwise, the procedure proceeds to step 220.

In step 220, it is determined that the first device does not support the current version negotiation, and that the version information of the device is the latest version information temporarily recorded.

As mentioned above, there are two reasons of returning the error code information: a message is returned by the first device to which a session request is sent and which does not support version negotiation; or a message is returned by the first device to which a session request is sent and which fails to identify the session request. The probability of the occurrence of the situation where the device fails to identify the session request is low. Therefore, it is assumed that the returned error code information is the message returned by the first device, which does not support version negotiation.

By the returned error code information, it is determined that the first device does not support the version negotiation by upgrading the version temporarily recorded by one version, or by replacing the version temporarily recorded with a version upgraded by one version, so as to determine that the version information of the first device is just the version temporarily recorded. If the process of temporarily recording is performed in the way of replacement, the version information of the first device is the latest version information temporarily recorded.

The second device saves the determined version information of the first device, and interacts with the first device according to the determined version information saved by the second device in next process of interacting with the first device, which reduces the process of version negotiation for subsequent interactions and increases the utilization efficiency of the network resources on the whole.

Alternatively, if the second device upgrades the version information up to the highest version to send a session request to the first device, and the first device returns non-error code information, it is determined that the first device supports the negotiation of the highest version. Therefore, it is determined that the version information of the first device is the highest version.

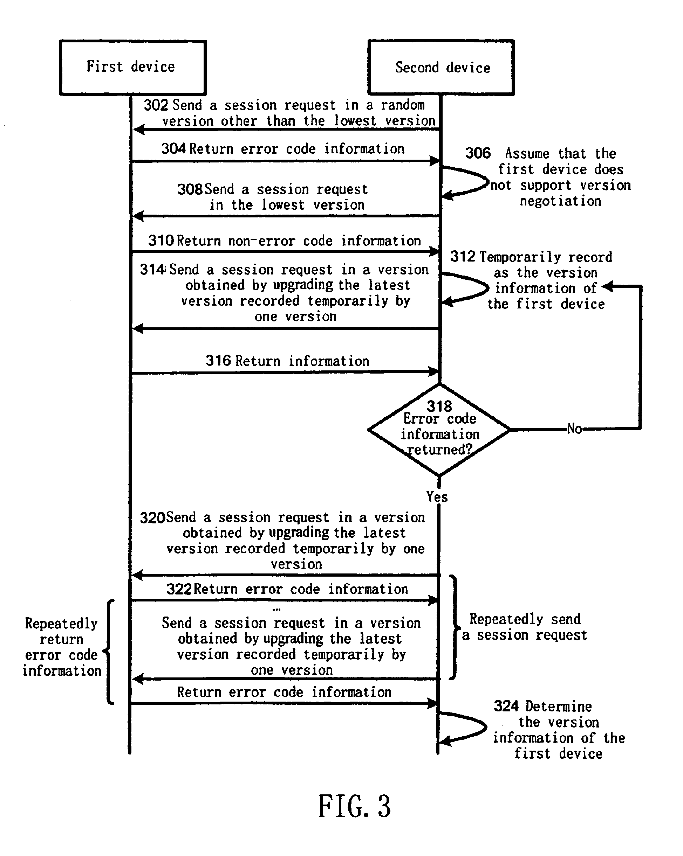

An embodiment of the present disclosure provides a method for determining version information. The embodiment is described with the version negotiation in the MAP layer protocol as an example. The method is described below with reference to Fig.3.

Steps 302 to 316 are the same as steps 202 to 216 and thus not described herein.

In step 318, the procedure returns to step 312 if the returned information is the non-error code information, and proceeds to step 320 if the returned information is the error code information.

In steps 320 to 322, the second device sends a session request to the first device repeatedly, and receives the information returned by the first device.

That is, if the returned information in step 318 is the error code information, the second device repeatedly sends a session request to the first device in the version information of the session request already sent at this time, which is the version obtained by upgrading the latest version recorded temporarily by one version.

If the number of times of repeating the session request reaches a preset threshold number, and all the information returned by the first device is the error code information, it is determined that the first device does not support the version negotiation in this version, and then the procedure proceeds to step 324. The threshold number may be any natural number. The bigger the threshold number, the more affirmative the fact that the error code information is returned due to the inability to support version negotiation. The threshold number is set by the second device. In consideration of degree of accuracy (the more the number of times of repetition, the more affirmative the fact that the first device returns the error code information due to the inability to support version negotiation) and saving network resources (the less the number of times of repetition, the more the network resources are saved), the threshold number is set to 5. That is, if the second device repeatedly sends a session request to the first device for five times in a version obtained by upgrading the temporarily recorded version by one version and the first device always returns error code information, it is determined that the first device does not support the version negotiation in this version. After one or more attempts, it is possible to exclude the situation where the first device fails to identify the session request, and thus it is determined that the returned error code information means that the first device does not support the version negotiation. By attempting to send a session request for once or more times, the situation where the first device fails to identify the session request is excluded if the error code information is always returned for the once or more times, and thus it is determined that the first device returns the error code information due to inability to support version negotiation. The second device will save the determined version information of the first device, and perform interaction with the first device in the determined version information saved by the second device in the next interaction with the first device, which reduces the version negotiation process for the subsequent interaction, and increases utilization efficiency of the network resources on the whole.

If the first device returns non-error code information in the process of repeatedly sending a session request till the preset threshold number, that is, in a case where the number of times of repetition of sending a session request to the first device by the second device is not more than the preset threshold number, the execution of repeatedly sending a session request is terminated immediately, because the fact that the first device returns the non-error code information proves that the first device supports version negotiation. The procedure returns to step 312. That is, the second device temporarily records the version information of the first device to perform replacement.

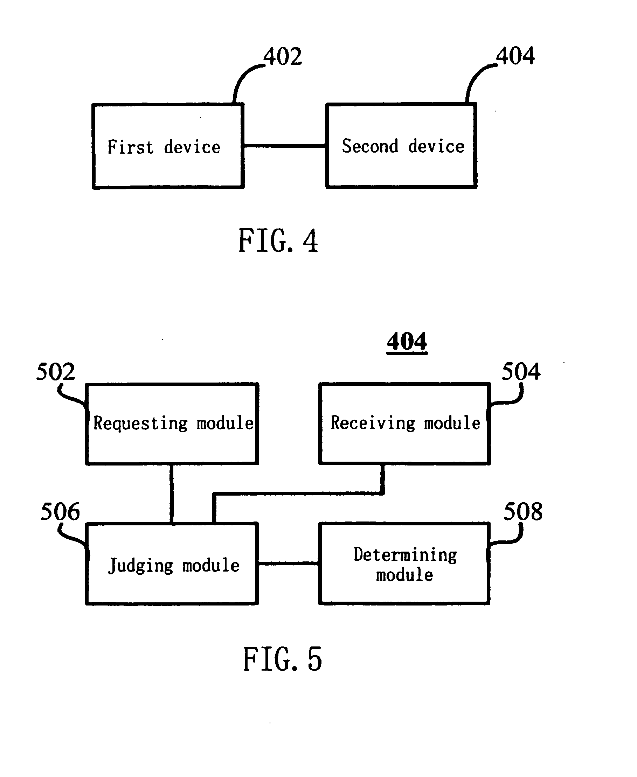

An embodiment of the present disclosure provides a system for determining version information, as shown in Fig.4, including a first device 402 and a second device 404, wherein the second device is configured to determine the version information of the first device 402, and the first device 402 is configured to return information in response to a session request sent by the second device 404.

The second device 404 is configured to send the first session request to the first device 402, receive the error code information returned by the first device 402 in response to the first session request, send one or more session requests to the first device 402 in response to the error code information, and determine the version information of the first device 402 according to one or more pieces of information returned by the first device 402 in response to said one or more session requests. The second device 404 is a device for determining version information of a device.

The version information of the first session request among said one or more session requests sent by the second device 404 to the first device 402 is set to the lowest version, and the version information of each subsequent session request is upgraded. The second device 404 sends each session request to the first device 402 in the changed version information, receives the information returned by the first device 402 in response to the each session request, and when the first device 402 returns the error code information, determines the version information of the previous session request to be the version information of the first device 402. If non-error code information is returned in a case where the second device 404 changes the version information of each session request up to the highest version, it is determined that the version information of the first device 402 is the highest version information.

Alternatively, when the information returned by the first device 402 is the non-error code information, the second device 404 temporarily records the version information of the session request sent at this time as the version information of the first device 402, at the same time, replaces the previously temporarily recorded version information of the first device 402, and finally, determines the latest version information of the first device 402 temporarily recorded as the version information of the first device 402.

An embodiment of the present disclosure provides an apparatus for determining version information, as shown in Fig.5, including: a requesting module 502, a receiving module 504, a judging module 506 and a determining module 508.

The request module 502 is configured to send a session request to a device.

The session request sent by the requesting module 502 to the device carries version information of the session. If the opposite device does not support the version of the session request sent by the requesting module 502, the requesting module 502 sends one or more session requests to the opposite device.

The receiving module 504 is configured to receive the information returned by the opposite device in response to each session request.

The opposite device returns information in response to the session request sent by the requesting module 502, and the receiving module 504 receives the information returned by the opposite device. The opposite device returns various information according to different versions carried in the session request sent by the requesting module 502 and with consideration as to whether the opposite device itself support the current version. For example, the error code information is returned when the version is not supported.

The judging module 506 is configured to: judge whether the information returned by the opposite device in response to the first session request is the error code information; trigger the requesting module 502 to send a subsequent session request again when the information returned by the opposite device in response to the first session request is the error code information; and continuously trigger the requesting module 502 when the information returned in response to the subsequent session request is the non-error code information, or trigger the determining module 508 when the information returned in response to the subsequent session request is the error code information.

The determining module 508 is configured to determine the version information of the opposite device. 09/12/2009

The judging module 506 is configured to judge whether the returned information is the error code information according to the previously configured causes of errors. The requesting module 502 sends a session request to the opposite device in a random version. When the information returned by the opposite device is the error code information, the judging module 506 triggers the requesting module 502 to send a session request again. Specifically, when the error code information is a message returned by the opposite device due to its failure of identifying the session request, the requesting module 502 can send a session request again in the current version information. When the error code information is returned because the opposite device does not support the version of the sent session request, the requesting module 502 can send a session request again by changing the version information of the session request to be sent.

As to the above-mentioned one or more session requests sent subsequently, the judging module 506 continuously judges whether the information returned by the opposite device in response to said one or more session requests sent subsequently is the error code information. If the information returned by the opposite device in response to said one or more session requests sent subsequently is the non-error code information, the requesting module 502 is triggered to change the version information and send a session request; if the information returned by the opposite in response to said one or more session requests sent subsequently is the error code information, the determining module 508 is triggered to determine the version information of the opposite device according to the judgment result of the judging module 506.

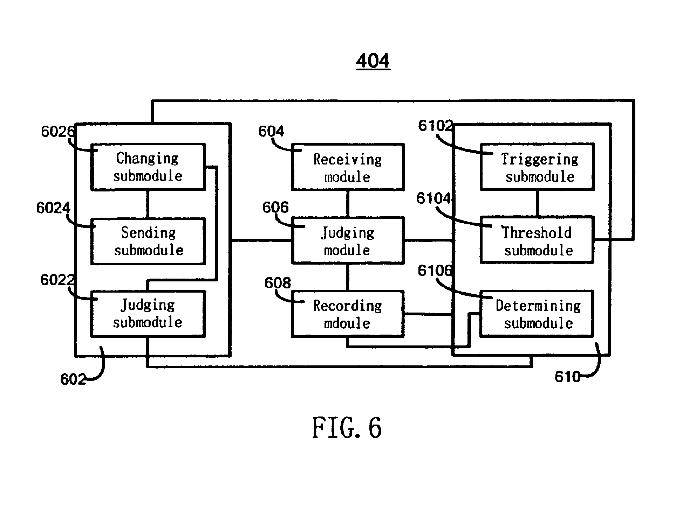

Specifically, the working principle of the apparatus for determining version information as shown in Fig.5 can be known with reference to the method as shown in Fig.2, and is not described herein. The specific configuration of each of the modules is illustrated with reference to an exemplary embodiment as shown in Fig.6.

As shown in Fig. 6, an embodiment of the present disclosure provides an apparatus for determining version information, including: a requesting module 602, a receiving module 604, a judging module 606, and a determining module 610.

The requesting module 602 is configured to send a session request to a device.

The receiving module 604 is configured to receive the information returned by the device in response to each session request.

The judging module 606 is configured to: judge whether the information returned by the device in response to each session request is the error code information; trigger the requesting module 602 to send a subsequent session request again when the information returned by the device in response to the first session request is the error code information; and trigger the requesting module 602 again when the information returned in response the subsequent session request is the non-error code information, or trigger the determining module 610 when the information returned in response to the subsequent session request is the error code information.

The determining module 610 is configured to determine the version information of the device.

Alternatively, the apparatus may include a recording submodule 608, which is configured to record the version information of the current session request sent when the information returned by the device is the non-error code information, and replace the version information recorded previously.

Specifically, the requesting module 602 may further include: a changing submodule 6026, configured to change the version information of a session request to be sent; and a sending submodule 6024, configured to send a session request according to the version information changed by the changing submodule 6026.

Specifically, the changing submodule 6026 may change the first session request among the above subsequent session requests to the lowest version in response to the triggering of the judging module 606, and upgrade the version information of each subsequent session request.

Optionally, the requesting module 602 may further include: a judging submodule 6022, configured to: judge whether the version information has been changed to the highest version; and trigger the determining module 610 if it is judged that the version information has been changed to the highest version, or trigger the changing submodule 6026 to change the version information again if it is judged that the version information has not been changed to the highest version.

When the version information has been changed to the highest version, the determining module 610 determines the version information of the device to be the highest version.

When the version information has not been changed to the highest version, the determining module 610 determines the version information of the device according to the judgment result of the judging module 606. Specifically, the determining module 610 may include: a triggering submodule 6102, configured to trigger a threshold submodule 6104 when the information returned by the device is the error code information; the threshold submodule 6104, configured to: judge whether the number of times of sending a session request in the current version information exceeds a threshold; and trigger a determining submodule 6106 if it is judged that times of sending a session request in the current version information exceeds a threshold number, or trigger a sending submodule 6024 in the requesting module to send a session request in the current version if it is judged that times of sending a session request in the current version information does not exceed a threshold number; the determining submodule 6106, configured to determine the latest version information recorded in the recording module 608 to be the version information of the device.

Optionally, the apparatus for determining version information of the device includes: a storage module, configured to store the version information of the device determined by the determining module 610.

Specifically, the working principle of the apparatus for determining version information as shown in Fig.6 can be known with reference to the method as shown in Fig.3, and is not described herein.

With the solutions of the embodiments of the present disclosure, the version information of an opposite device not supporting version negotiation, can be determined finally in a way of performing one or more attempts. The solutions solve the problems that many devices cannot interact with each other successfully and thus the version information of the devices cannot be determined, because the devices do not support the version negotiation procedure. The solutions thus solve the problem of interaction and compatibility of the devices not supporting the version negotiation. By determining the version information of the devices not supporting version negotiation, the version negotiation process is reduced for the subsequent interaction, and the utilization efficiency of the network resources is improved on the whole

With the description of the above embodiments, persons skilled in the art can clearly appreciate that it is not necessary to introduce independent functional parts and the embodiments can be realized by means of a software plus a necessary common hardware platform. Based on the understanding, the technical solutions of the embodiments of the present disclosure substantially can be embodied in the form of a software product. The computer software product is stored in a storage medium, including a plurality of instructions for executing the methods stated in the embodiments of the present disclosure. The storage medium stated herein may include ROM/RAM, disk, compact disc, etc.

To sum up, the above contents are only exemplary embodiments of the present disclosure, and are not intended to limit the protection scope of the present disclosure, which shall be defined by the claims..

## Claims

1. A method for determining version information, comprising:
sending a first session request to a device according to a random version other than the lowest version of a Mobile Application Part, MAP, protocol, and receiving error code information returned by the device in response to the first session request (102), the error code information comprising a message returned when the device does not support version negotiation procedure or a message returned when the device fails to identify the session request;
judging that the device does not support the version negotiation procedure when the error code information is received and sending at least one session request to the device (104); and
determining version information of the MAP protocol adopted by the device according to information returned by the device in response to said at least one session request (104),
**characterised in that**,
the process of sending said at least one session request to the device comprises:
changing version information for a session request to be sent each time; and
sending the session request according to the changed version information,
and that the process of determining the version information of the MAP protocol adopted by the device according to information returned by the device in response to said at least one session request comprises:
receiving information returned by the device in response to the session request sent each time; and
when the information returned by the device is error code information, determining the version information for the previous session request to be the version information of the MAP protocol adopted by the device, while determining the version information of the MAP protocol adopted by the device to be the highest version, if non-error code information is returned in the case of changing the version information for the session request to be sent each time, up to the highest version.

2. The method according to claim 1, wherein the process of changing the version information for the session request to be sent each time comprises:
changing the version information for the first session request among said at least one session request to the lowest version, and upgrading the version information for each following session request.

3. The method according to claim 2, further comprising:
temporarily recording the version information for the session request sent at the current time as the version information of the MAP protocol adopted by the device when the information returned by the device is the non-error code information, and at the same time, replacing the previously temporarily recorded version information of the MAP protocol adopted by the device.

4. The method according to claim 3, wherein the process of determining the version information for the previous session request to be the version information of the MAP protocol adopted by the device comprises: determining the latest version information recorded temporarily to be the version information of the MAP protocol adopted by the device.

5. The method according to claim 3, further comprising:
when the returned information is the error code information, repeatedly sending the current session request to the device until the received information returned by the device is the non-error code information, then performing the process of changing the version information for the session request to be sent each time, and sending a session request according to the changed version information; and
when the number of times of repeatedly sending the current session request to the device reaches a preset threshold number, performing the process of determining the version information for the previous session request to be the version information of the MAP protocol adopted by the device.

6. An apparatus for determining version information, comprising:
a requesting module (502), configured to send a session request to a device;
a receiving module (504), configured to receive information returned by the device in response to the session request;
a judging module (506), configured to judge whether the information returned by the device in response to the session request is error code information; trigger the requesting module (502) to send a session request again when the information returned by the device in response to the first session request is the error code information, and trigger the requesting module (502) again when information returned in response to a next session request is non-error code information; and trigger a determining module (508) when the information returned in response to the next session request is the error code information; and
the determining module (508), configured to determine version information of a Mobile Application Part, MAP, protocol adopted by the device,
wherein the requesting module (502) comprises:
a changing submodule (6026), configured to change version information of a session request to be sent; and
a sending submodule (6024), configured to send a session request according to the changed version information,
**characterised in that**,
the changing submodule (6026) is configured to change the version information for the session request immediately after the first session request to the lowest version, and upgrade the version information for each following session request; and
the requesting module (502) further comprises: a judging submodule (6022), configured to judge whether the version information has been changed to the highest version; and trigger the determining module (508) if it is judged that the version information has been changed to the highest version, or trigger the changing submodule (6026) if it is judged that the version information has not been changed to the highest version.

7. The apparatus according to claim 6, further comprising:
a recording module (608), configured to record the version information of the session request sent at current time when the information returned by the device is non-error code information, and at the same time, replace the previously recorded version information.

8. The apparatus according to claim 7, wherein the determining module (508) is configured to determine the latest version information recorded by the recording module (608) to be the version information of the MAP protocol adopted by the device.

9. The apparatus according to claim 7, wherein the determining module (508) comprises:
a trigger submodule (6102), configured to trigger a threshold submodule (6104) when the returned information is the error code information;
the threshold submodule (6104), configured to: judge whether the number of times of sending a session request according to the current version information exceeds a threshold number; and trigger a determining submodule (6106) if the result of the judgment made by the threshold submodule (6104) is that the times of sending a session request according to the current version information exceeds a threshold number, or trigger a sending submodule (6024) in the requesting module (502) if the result of the judgment made by the threshold submodule (6104) is that the times of sending a session request according to the current version information does not exceed the threshold number; and
the determining submodule (6106), configured to determine the latest version information recorded by the recording module (608) to be the version information of the MAP protocol adopted by the device;
wherein the sending submodule (6024) is further configured to continue to send a session request according to the current version information in response to the triggering of the trigger submodule (6102).

10. A system for determining version information, comprising an apparatus for determining version information of any one of claims 6-10 and a device, wherein the device is configured to receive a session request sent by the apparatus for determining version information and return information in response to said session request.

## Patentansprüche

1. Verfahren zum Bestimmen von Versionsinformationen, mit den folgenden Schritten:
Senden einer ersten Sitzungsanforderung zu einer Einrichtung gemäß einer Zufallsversion, die von der niedrigsten Version eines Protokolls des Mobile Application Part MAP verschieden ist, und Empfangen von durch die Einrichtung als Reaktion auf die erste Sitzungsanforderung (102) zurückgegebenen Fehlercodeinformationen, wobei die Fehlercodeinformationen eine Nachricht, die zurückgegeben wird, wenn die Einrichtung keine Versionsaushandlungsprozedur unterstützt, oder eine Nachricht, die zurückgegeben wird, wenn die Einrichtung die Sitzungsanforderung nicht identifizieren kann, umfassen;
Beurteilen, dass die Einrichtung die Versionsaushandlungsprozedur nicht unterstützt, wenn die Fehlercodeinformationen empfangen werden, und Senden mindestens einer Sitzungsanforderung zu der Einrichtung (104); und
Bestimmen von Versionsinformationen des von der Einrichtung verwendeten MAP-Protokolls gemäß durch die Einrichtung als Reaktion auf die mindestens eine Sitzungsanforderung (104) zurückgegebenen Informationen,
**dadurch gekennzeichnet, dass**
der Prozess des Sendens mindestens einer Sitzungsanforderung zu der Einrichtung Folgendes umfasst:
Ändern von Versionsinformationen für eine jedes Mal zu sendende Sitzungsanforderung; und
Senden der Sitzungsanforderung gemäß den geänderten Versionsinformationen, und dass der Prozess des Bestimmens der Versionsinformationen des von der Einrichtung verwendeten MAP-Protokolls gemäß durch die Einrichtung als Reaktion auf die mindestens eine Sitzungsanforderung zurückgegebenen Informationen Folgendes umfasst:
Empfangen von durch die Einrichtung als Reaktion auf die jedes Mal gesendete Sitzungsanforderung zurückgegebenen Informationen; und
wenn die durch die Einrichtung zurückgegebenen Informationen Fehlercodeinformationen sind, Bestimmen der Versionsinformationen für die vorherige Sitzungsanforderung als die Versionsinformationen des von der Einrichtung verwendeten MAP-Protokolls, während die Versionsinformationen des von der Einrichtung verwendeten MAP-Protokolls als die höchste Version bestimmt werden, wenn Nicht-Fehlercodeinformationen zurückgegeben werden, falls die Versionsinformationen für die jedes Mal zu sendende Sitzungsanforderung geändert werden, bis zu der höchsten Version.

2. Verfahren nach Anspruch 1, wobei der Prozess des Änderns der Versionsinformationen für die jedes Mal zu sendende Sitzungsanforderung Folgendes umfasst:
Umändern der Versionsinformationen für die erste Sitzungsanforderung unter der mindestens einen Sitzungsanforderung in die niedrigste Version und Aufrüsten der Versionsinformationen für jede folgende Sitzungsanforderung.

3. Verfahren nach Anspruch 2, ferner mit den folgenden Schritten:
vorübergehendes Aufzeichnen der Versionsinformationen für die zum aktuellen Zeitpunkt gesendete Sitzungsanforderung als die Versionsinformationen des von der Einrichtung verwendeten MAP-Protokolls, wenn die durch die Einrichtung zurückgegebenen Informationen die Nicht-Fehlercodeinformationen sind, und gleichzeitig Ersetzen der zuvor vorübergehend aufgezeichneten Versionsinformationen des von der Einrichtung verwendeten MAP-Protokolls.

4. Verfahren nach Anspruch 3, wobei der Prozess des Bestimmens der Versionsinformationen für die vorherige Sitzungsanforderung als die Versionsinformationen des von der Einrichtung verwendeten MAP-Protokolls Folgendes umfasst:
Bestimmen der neuesten vorübergehend aufgezeichneten Versionsinformationen als die Versionsinformationen des von der Einrichtung verwendeten MAP-Protokolls.

5. Verfahren nach Anspruch 3, ferner mit den folgenden Schritten:
wenn die zurückgegebenen Informationen die Fehlercodeinformationen sind, wiederholtes Senden der aktuellen Sitzungsanforderung zu der Einrichtung, bis die durch die Einrichtung zurückgegebenen empfangenen Informationen die Nicht-Fehlercodeinformationen sind, und dann Ausführen des Prozesses des Änderns der Versionsinformationen für die jedes Mal zu sendende Sitzungsanforderung und Senden einer Sitzungsanforderung gemäß den geänderten Versionsinformationen; und
wenn die Anzahl von Malen des wiederholten Sendens der aktuellen Sitzungsanforderung zu der Einrichtung eine voreingestellte Schwellenanzahl erreicht, Ausführen des Prozesses des Bestimmens der Versionsinformationen für die vorherige Sitzungsanforderung als die Versionsinformationen des von der Einrichtung verwendeten MAP-Protokolls.

6. Vorrichtung zum Bestimmen von Versionsinformationen, umfassend:
ein Anforderungsmodul (502), das dafür ausgelegt ist, eine Sitzungsanforderung zu einer Einrichtung zu senden;
ein Empfangsmodul (504), das dafür ausgelegt ist, durch die Einrichtung als Reaktion auf die Sitzungsanforderung zurückgegebene Informationen zu empfangen;
ein Beurteilungsmodul (506), das dafür ausgelegt ist, zu beurteilen, ob die durch die Einrichtung als Reaktion auf die Sitzungsanforderung zurückgegebenen Informationen Fehlercodeinformationen sind; das Anforderungsmodul (502) zu triggern, nochmals eine Sitzungsanforderung zu senden, wenn die durch die Einrichtung als Reaktion auf die erste Sitzungsanforderung zurückgegebenen Informationen die Fehlercodeinformationen sind und das Anforderungsmodul (502) nochmals zu triggern, wenn als Reaktion auf eine nächste Sitzungsanforderung zurückgegebene Informationen Nicht-Fehlercodeinformationen sind; und ein Bestimmungsmodul (508) zu triggern, wenn die als Reaktion auf die nächste Sitzungsanforderung zurückgegebenen Informationen die Fehlercodeinformationen sind; und
das Bestimmungsmodul (508), das dafür ausgelegt ist, Versionsinformationen eines von der Einrichtung verwendeten Protokolls des Mobile Application Part MAP zu bestimmen,
wobei das Anforderungsmodul (502) Folgendes umfasst:
ein Änderungs-Submodul (6026), das dafür ausgelegt ist, Versionsinformationen einer zu sendenden Sitzungsanforderung zu ändern; und
ein Sende-Submodul (6024), das dafür ausgelegt ist, eine Sitzungsanforderung gemäß den geänderten Versionsinformationen zu senden,
**dadurch gekennzeichnet, dass**
das Änderungs-Submodul (6026) dafür ausgelegt ist, die Versionsinformationen für die Sitzungsanforderung unmittelbar nach der ersten Sitzungsanforderung in die niedrigste Version umzuändern und die Versionsinformationen für jede folgende Sitzungsanforderung aufzurüsten; und
das Anforderungsmodul (502) ferner Folgendes umfasst: ein Beurteilungs-Submodul (6022), das dafür ausgelegt ist, zu beurteilen, ob die Versionsinformationen in die höchste Version umgeändert wurden; und das Bestimmungsmodul (508) zu triggern, wenn beurteilt wird, dass die Versionsinformationen in die höchste Version umgeändert wurden, oder das Änderungs-Submodul (6026) zu triggern, wenn beurteilt wird, dass die Versionsinformationen nicht in die höchste Version umgeändert wurden.

7. Vorrichtung nach Anspruch 6, ferner umfassend:
ein Aufzeichnungsmodul (608), das dafür ausgelegt ist, die Versionsinformationen der zum aktuellen Zeitpunkt gesendeten Sitzungsanforderung aufzuzeichnen, wenn die durch die Einrichtung zurückgegebenen Informationen Nicht-Fehlercodeinformationen sind, und gleichzeitig die zuvor aufgezeichneten Versionsinformationen zu ersetzen.

8. Vorrichtung nach Anspruch 7, wobei das Bestimmungsmodul (508) dafür ausgelegt ist, die durch das Aufzeichnungsmodul (608) aufgezeichneten neuesten Versionsinformationen als die Versionsinformationen des von der Einrichtung verwendeten MAP-Protokolls zu bestimmen.

9. Vorrichtung nach Anspruch 7, wobei das Bestimmungsmodul (508) Folgendes umfasst:
ein Trigger-Submodul (6102), das dafür ausgelegt ist, ein Schwellen-Submodul (6104) zu triggern, wenn die zurückgegebenen Informationen die Fehlercodeinformationen sind;
das Schwellen-Submodul (6104), das für Folgendes ausgelegt ist: Beurteilen, ob die Anzahl von Malen des Sendens einer Sitzungsanforderung gemäß den aktuellen Versionsinformationen eine Schwellenanzahl übersteigt; und Triggern eines Bestimmungs-Submoduls (6106), wenn das Ergebnis der durch das Schwellen-Submodul (6104) durchgeführten Beurteilung darin besteht, dass die Male des Sendens einer Sitzungsanforderung gemäß den aktuellen Versionsinformationen eine Schwellenanzahl übersteigen, oder Triggern eines Sende-Submoduls (6024) in dem Anforderungsmodul (502), wenn das Ergebnis der durch das Schwellen-Submodul (6104) durchgeführten Beurteilung darin besteht, dass die Male des Sendens einer Sitzungsanforderung gemäß den aktuellen Versionsinformationen die Schwellenanzahl nicht übersteigen; und
das Bestimmungs-Submodul (6106), das dafür ausgelegt ist, die durch das Aufzeichnungsmodul (608) aufgezeichneten neuesten Versionsinformationen als die Versionsinformationen des von der Einrichtung verwendeten MAP-Protokolls zu bestimmen;
wobei das Sende-Submodul (6024) ferner dafür ausgelegt ist, das Senden einer Sitzungsanforderung gemäß den aktuellen Versionsinformationen als Reaktion auf das Triggern des Trigger-Submoduls (6102) fortzusetzen.

10. System zum Bestimmen von Versionsinformationen, das eine Vorrichtung zum Bestimmen von Versionsinformationen nach einem der Ansprüche 6-10 und eine Einrichtung umfasst, wobei die Einrichtung dafür ausgelegt ist, eine durch die Vorrichtung zur Bestimmung von Versionsinformationen gesendete Sitzungsanforderung zu empfangen und als Reaktion auf die Sitzungsanforderung Informationen zurückzugeben.

## Revendications

1. Procédé permettant d'établir des informations de version, comprenant les étapes consistant à :
transmettre une première demande de session à un dispositif selon une version aléatoire autre que la version la moins évoluée d'un protocole de sous-système d'application mobile, dit MAP, et recevoir des informations de code d'erreur renvoyées par le dispositif en réponse à la première demande de session (102), les informations de code d'erreur comprenant un message renvoyé si le dispositif ne sait pas gérer une procédure de négociation de version ou un message renvoyé si le dispositif ne parvient pas à identifier la demande de session ;
déterminer que le dispositif ne sait pas gérer la procédure de négociation de version lorsque les informations de code d'erreur sont reçues, et transmettre au moins une demande de session au dispositif (104) ; et
établir des informations de version du protocole MAP adopté par le dispositif selon des informations renvoyées par le dispositif en réponse à ladite au moins une demande de session (104),
**caractérisé en ce que** :
l'étape consistant à transmettre ladite au moins une demande de session au dispositif comprend les étapes consistant à :
modifier des informations de version pour une demande de session à transmettre chaque fois ; et
transmettre la demande de session selon les informations de version modifiées, et **en ce que** l'étape consistant à établir les informations de version du protocole MAP adopté par le dispositif selon des informations renvoyées par le dispositif en réponse à ladite au moins une demande de session comprend les étapes consistant à :
recevoir des informations renvoyées par le dispositif en réponse à la demande de session transmise chaque fois ; et
si les informations renvoyées par le dispositif sont des informations de code d'erreur, établir les informations de version pour la demande de session précédente comme informations de version du protocole MAP adopté par le dispositif, tout en établissant les informations de version du protocole MAP adopté par le dispositif comme version la plus évoluée si des informations différentes d'informations de code d'erreur sont renvoyées en cas de modification pour la version la plus évoluée des informations de version pour la demande de session à transmettre chaque fois.

2. Procédé selon la revendication 1, l'étape consistant à modifier les informations de version pour la demande de session à transmettre chaque fois comprenant l'étape consistant à :
modifier pour la version la moins évoluée les informations de version pour la première demande de session parmi ladite au moins une demande de session, et relever le niveau des informations de version pour chaque demande de session suivante.

3. Procédé selon la revendication 2, comprenant en outre l'étape consistant à :
enregistrer temporairement les informations de version pour la demande de session transmise à ce moment-là comme les informations de version du protocole MAP adopté par le dispositif si les informations renvoyées par le dispositif sont les informations différentes d'informations de code d'erreur et remplacer simultanément les informations de version précédemment enregistrées temporairement du protocole MAP adopté par le dispositif.

4. Procédé selon la revendication 3, l'étape consistant à établir les informations de version pour la demande de session précédente comme informations de version du protocole MAP adopté par le dispositif comprenant l'étape consistant à :
établir les dernières informations de version en date enregistrées temporairement comme informations de version du protocole MAP adopté par le dispositif.

5. Procédé selon la revendication 3, comprenant en outre les étapes consistant à :
si les informations renvoyées sont les informations de code d'erreur, transmettre à plusieurs reprises au dispositif la demande de session du moment jusqu'à ce que les informations reçues renvoyées par le dispositif soient les informations différentes d'informations de code d'erreur, puis exécuter l'étape consistant à modifier les informations de version pour la demande de session à transmettre chaque fois, et transmettre une demande de session selon les informations de version modifiées ; et
si le nombre de fois où la demande de session du moment est transmise à plusieurs reprises au dispositif atteint un nombre seuil prédéfini, exécuter l'étape consistant à établir les informations de version pour la demande de session précédente comme informations de version du protocole MAP adopté par le dispositif.

6. Appareil permettant d'établir des informations de version, comprenant :
un module de demande (502), conçu pour transmettre une demande de session à un dispositif ;
un module de réception (504), conçu pour recevoir des informations renvoyées par le dispositif en réponse à la demande de session ;
un module de détermination (506), conçu pour déterminer si les informations renvoyées par le dispositif en réponse à la demande de session sont des informations de code d'erreur ; déclencher le module de demande (502) pour lui faire transmettre une nouvelle fois une demande de session si les informations renvoyées par le dispositif en réponse à la première demande de session sont des informations de code d'erreur, et déclencher une nouvelle fois le module de demande (502) si les informations renvoyées en réponse à une nouvelle demande de session sont des informations différentes d'informations de code d'erreur ; et déclencher un module d'établissement (508) si les informations renvoyées en réponse à la demande de session suivante sont les informations de code d'erreur ; et
un module d'établissement (508), conçu pour établir des informations de version d'un protocole de sous-système d'application mobile, dit MAP, adopté par le dispositif ;
le module de demande (502) comprenant :
un sous-module de modification (6026), conçu pour modifier des informations de version d'une demande de session à transmettre ; et
un sous-module de transmission (6024), conçu pour transmettre une demande de session selon les informations de version modifiées,
**caractérisé en ce que** :
le sous-module de modification (6026) est conçu pour modifier pour la version la moins évoluée les informations de version pour la demande de session qui suit immédiatement la première demande de session, et relever le niveau des informations de version pour chaque demande de session suivante ; et
le module de demande (502) comprend en outre : un sous-module de détermination (6022), conçu pour déterminer si les informations de version ont été modifiées pour la version la plus évoluée ; et déclencher le module d'établissement (508) s'il est déterminé que les informations de version ont été modifiées pour la version la plus évoluée, ou déclencher le sous-module de modification (6026) s'il est déterminé que les informations de version n'ont pas été modifiées pour la version la plus évoluée.

7. Appareil selon la revendication 6, comprenant en outre :
un module d'enregistrement (608), conçu pour enregistrer les informations de version de la demande de session transmise à ce moment-là si les informations renvoyées par le dispositif sont des informations différentes d'informations de code d'erreur et remplacer simultanément les informations de version précédemment enregistrées.

8. Appareil selon la revendication 7, le module d'établissement (508) étant conçu pour établir les dernières informations de version en date enregistrées par le module d'enregistrement (608) comme informations de version du protocole MAP adopté par le dispositif.

9. Appareil selon la revendication 7, le module d'établissement (508) comprenant :
un sous-module de déclenchement (6102), conçu pour déclencher un sous-module à seuil (6104) si les informations renvoyées sont les informations de code d'erreur ;
le sous-module à seuil (6104), conçu pour : déterminer si le nombre de fois où une demande de session est transmise selon les informations de version du moment excède un nombre seuil ; et déclencher un sous-module d'établissement (6106) si le sous-module à seuil (6104) détermine que le nombre de fois où une demande de session est transmise selon les informations de version du moment excède un nombre seuil, ou déclencher un sous-module de transmission (6024) dans le module de demande (502) si le sous-module à seuil (6104) détermine que le nombre de fois où une demande de session est transmise selon les informations de version du moment n'excède pas le nombre seuil ; et
le sous-module d'établissement (6106), conçu pour établir les dernières informations de version en date enregistrées par le module d'enregistrement (608) comme informations de version du protocole MAP adopté par le dispositif ;
le sous-module de transmission (6024) étant en outre conçu pour continuer de transmettre une demande de session selon les informations de version du moment en réponse au déclenchement du sous-module de déclenchement (6102).

10. Système permettant d'établir des informations de version, comprenant un appareil permettant d'établir des informations de version selon l'une quelconque des revendications 6 à 10 et un dispositif, le dispositif étant conçu pour recevoir une demande de session transmise par l'appareil permettant d'établir des informations de version et renvoyer des informations en réponse à ladite demande de session.
